(19) Europäisches Patentamt
European Patent Office
Office européen des brevets

(11) **EP 4 679 536 A1**

(12) **EUROPEAN PATENT APPLICATION**
published in accordance with Art. 153(4) EPC

(43) Date of publication:
**14.01.2026 Bulletin 2026/03**

(21) Application number: 24766921.1

(22) Date of filing: **26.02.2024**

(51) International Patent Classification (IPC):
*H01M 4/62* (2006.01)     *C08F 212/08* (2006.01)
*C08F 220/10* (2006.01)    *H01G 11/06* (2013.01)
*H01G 11/38* (2013.01)     *H01M 4/13* (2010.01)
*H01M 4/139* (2010.01)

(52) Cooperative Patent Classification (CPC):
C08F 212/08; C08F 220/10; H01G 11/06;
H01G 11/38; H01M 4/13; H01M 4/139; H01M 4/62;
Y02E 60/10

(86) International application number:
**PCT/JP2024/006779**

(87) International publication number:
**WO 2024/185550 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  08.03.2023  JP 2023035438

(71) Applicant: ENEOS Materials Corporation
Tokyo 105-7109 (JP)

(72) Inventors:
• **MORI, Kazumasa**
  **Tokyo 105-7109 (JP)**
• **MASUDA, Kana**
  **Tokyo 105-7109 (JP)**
• **NAKAYAMA, Takuya**
  **Tokyo 105-7109 (JP)**

(74) Representative: **TBK**
**Bavariaring 4-6**
**80336 München (DE)**

(54) **COMPOSITION FOR NONAQUEOUS SECONDARY BATTERY POSITIVE ELECTRODES, SLURRY FOR NONAQUEOUS SECONDARY BATTERY POSITIVE ELECTRODES, POSITIVE ELECTRODE FOR NONAQUEOUS SECONDARY BATTERIES, AND NONAQUEOUS SECONDARY BATTERY**

(57)     Provided is a composition for a nonaqueous secondary battery positive electrode, which can reduce the occurrence of the corrosion of a positive electrode for a nonaqueous secondary battery through the prevention of an increase in pH of a slurry for a nonaqueous secondary battery positive electrode, and can improve the adhesiveness and charge-discharge durability characteristic of the positive electrode for a nonaqueous secondary battery.

The composition for a nonaqueous secondary battery positive electrode according to the present invention includes: a polymer (A); at least one kind selected from a group consisting of a polyamine compound (B) and a boron-containing compound (C); and a liquid medium (E). When the total of repeating units in the polymer (A) is defined as 100 mass%, the polymer (A) contains 5 mass% to 75 mass% of a repeating unit (a1) derived from an aromatic vinyl compound, and 20 mass% to 90 mass% of a repeating unit (a2) derived from an unsaturated carboxylic acid ester.

## Description

[Technical Field]

The present invention relates to a composition for a nonaqueous secondary battery positive electrode, a slurry for a nonaqueous secondary battery positive electrode, a positive electrode for a nonaqueous secondary battery, and a nonaqueous secondary battery.

[Background Art]

In recent years, an electrical storage device having a high voltage and a high energy density has been demanded as a power source for driving electronic equipment. A lithium ion battery, a lithium ion capacitor, or the like is promising as such electrical storage device.

An electrode to be used in such electrical storage device is produced by: applying a composition (slurry for an electrical storage device electrode) containing an active material and a polymer that functions as a binder to the surface of a current collector; and drying the composition. Characteristics demanded of the polymer to be used as a binder may include: a binding ability between the molecules of the active material; an adhesive ability between the active material and the current collector; abrasion resistance in a process of winding the electrode; and powder fall-off resistance that prevents fine powder or the like of the active material from being detached from a coating film of the applied and dried composition (hereinafter also referred to as "active material layer") even in subsequent cutting or the like. Such binder material expresses satisfactory adhesiveness and reduces the internal resistance of a battery resulting from the binder material, and hence can impart a satisfactory charge-discharge characteristic to the electrical storage device.

With regard to the binding ability between the molecules of the active material, the adhesive ability between the active material and the current collector, and the powder fall-off resistance described above, it has been empirically revealed that their qualities of performance have a nearly proportional relationship with each other. Accordingly, those properties are hereinafter sometimes collectively referred to with the term "adhesiveness".

To produce an electrochemical device excellent in capacity and charge-discharge cycle characteristic, the use of a positive electrode active material having high reactivity with water has recently been investigated. In addition, at the time of the production of a slurry for a positive electrode containing the positive electrode active material and a binder, the use of an aqueous binder has been investigated for the purposes of cost, safety, and a reduction in environmental load.

Against such background, various binder materials have been proposed with a view to solving the various problems of the slurry for a positive electrode (see, for example, Patent Literatures 1 and 2).

[Citation List]

[Patent Literature]

    [PTL 1] WO 2020/095466 A1
    [PTL 2] JP 2019-194944 A

[Summary of Invention]

[Technical Problem]

However, when a slurry for a positive electrode containing any one of the binder materials disclosed in Patent Literatures 1 and 2 described above is used, the following has occurred in some cases: water in the slurry for a positive electrode and a positive electrode active material react with each other to produce a hydroxide ion ($OH^-$), and an electrode is corroded by the hydroxide ion. In addition, a positive electrode produced by using such slurry for a positive electrode is not sufficient in characteristics, such as adhesiveness and charge-discharge durability characteristic, and hence a further improvement thereof has been required.

Several aspects according to the present invention each provide a composition for a nonaqueous secondary battery positive electrode, which can reduce the occurrence of the corrosion of a positive electrode for a nonaqueous secondary battery through the prevention of an increase in pH of a slurry for a nonaqueous secondary battery positive electrode, and can improve the adhesiveness and charge-discharge durability characteristic of the positive electrode for a nonaqueous secondary battery. In addition, several aspects according to the present invention each provide a slurry for a nonaqueous secondary battery positive electrode, which can reduce the occurrence of the corrosion of a positive electrode for a nonaqueous secondary battery through the prevention of an increase in pH thereof, and can improve the adhesiveness and charge-discharge durability characteristic of the positive electrode for a nonaqueous secondary battery. In addition, several aspects according to the present invention each provide a positive electrode for a nonaqueous secondary battery, which can be reduced from corroding, and can be improved in adhesiveness and charge-discharge durability characteristic. Further, several aspects according to the present invention each provide a nonaqueous secondary battery excellent in charge-discharge durability characteristic.

[Solution to Problem]

The present invention has been made to solve at least part of the above-mentioned problems, and may be achieved as any one of the following aspects.

According to one aspect of the present invention, there is provided a composition for a nonaqueous secondary battery positive electrode, the composition including:

a polymer (A);
at least one kind selected from a group consisting of a polyamine compound (B) and a boron-containing compound (C); and
a liquid medium (E),
wherein, when a total of repeating units in the polymer (A) is defined as 100 mass%, the polymer (A) contains
5 mass% to 75 mass% of a repeating unit (a1) derived from an aromatic vinyl compound, and
20 mass% to 90 mass% of a repeating unit (a2) derived from an unsaturated carboxylic acid ester.

In the above aspect of the composition for a nonaqueous secondary battery positive electrode, the polyamine compound (B) may be at least one kind selected from a group consisting of polyethyleneimine, polytetramethyleneimine, polyvinylamine, and polyallylamine.

In the above aspect of the composition for a nonaqueous secondary battery positive electrode, the boron-containing compound (C) may be at least one kind selected from a group consisting of boric acid, lithium tetraborate, sodium tetraborate, and potassium tetraborate.

Any of the above aspects of the composition for a nonaqueous secondary battery positive electrode may further include an acidic compound (D).

In any of the above aspects of the composition for a nonaqueous secondary battery positive electrode, the acidic compound (D) may be at least one kind selected from a group consisting of malonic acid, succinic acid, sulfuric acid, phosphoric acid, and ammonium sulfate.

In any of the above aspects of the composition for a nonaqueous secondary battery positive electrode, when a content of the polyamine compound (B) is represented by Mb parts by mass and a content of the acidic compound (D) is represented by Md parts by mass, a value of a ratio Mb/Md may be from 0.3 to 5.0.

In any of the above aspects of the composition for a nonaqueous secondary battery positive electrode, the polymer (A) may further contain 0.1 mass% to 10 mass% of a repeating unit (a3) derived from an unsaturated carboxylic acid.

In any of the above aspects of the composition for a nonaqueous secondary battery positive electrode,

the polymer (A) may be in a form of polymer particles, and
the polymer particles may have a number average particle diameter of 50 nm or more and 500 nm or less.

Any of the above aspects of the composition for a nonaqueous secondary battery positive electrode may further include a thickener.

According to one aspect of the present invention, there is provided a slurry for a nonaqueous secondary battery positive electrode, the slurry including:

any of the above aspects of the composition for a nonaqueous secondary battery positive electrode; and
a positive electrode active material.

According to one aspect of the present invention, there is provided a positive electrode for a nonaqueous secondary battery, the positive electrode including:

a current collector; and
an active material layer formed by applying the above aspect of the slurry for a nonaqueous secondary battery positive electrode to a surface of the current collector and drying the slurry.

According to one aspect of the present invention, there is provided a nonaqueous secondary battery including the above aspect of the positive electrode for a nonaqueous secondary battery.

[Advantageous Effects of Invention]

The composition for a nonaqueous secondary battery positive electrode according to the present invention can reduce the occurrence of the corrosion of a positive electrode for a nonaqueous secondary battery through the prevention of an increase in pH of a slurry for a nonaqueous secondary battery positive electrode, and can produce a positive electrode for a nonaqueous secondary battery excellent in adhesiveness and charge-discharge durability characteristic.

[Description of Embodiments]

Preferred embodiments of the present invention are described in detail below. It should be appreciated that the present invention is not limited to the following embodiments, and includes various modification examples implemented within the scope of the present invention.

Herein, the term "(meth)acrylic acid ..." represents "acrylic acid ..." or "methacrylic acid ...," the term "... (meth) acrylate" represents "... acrylate" or "... methacrylate," and the term "(meth)acrylamide" represents "acrylamide" or "methacrylamide".

Herein, a numerical range denoted as "X to Y" is to be construed to include a numerical value X as its lower limit value and a numerical value Y as its upper limit value.

1. Composition for Nonaqueous Secondary Battery Positive Electrode

A composition for a nonaqueous secondary battery positive electrode according to one embodiment of the present invention includes: a polymer (A); at least one kind selected from the group consisting of: a polyamine compound (B); and a boron-containing compound (C); and a liquid medium (E). When the total of repeating units in the polymer (A) is defined as 100 mass%, the polymer (A) contains 5 mass% to 75 mass% of a repeating unit (a1) derived from an aromatic vinyl compound, and 20 mass% to 90 mass% of a repeating unit (a2) derived from an unsaturated carboxylic acid ester. The respective components that may be incorporated into the composition for a nonaqueous secondary battery positive electrode according to this embodiment are described in detail below.

1.1. Polymer (A)

The composition for a nonaqueous secondary battery positive electrode according to this embodiment includes the polymer (A). When the total of the repeating units in the polymer (A) is defined as 100 mass%, the polymer (A) contains 5 mass% to 75 mass% of the repeating unit (a1) derived from the aromatic vinyl compound (hereinafter also referred to simply as "repeating unit (a1)"), and 20 mass% to 90 mass% of the repeating unit (a2) derived from the unsaturated carboxylic acid ester (hereinafter also referred to simply as "repeating unit (a2)"). In addition, the polymer (A) may include, in addition to the repeating unit (a1) and the repeating unit (a2), a repeating unit derived from another monomer copolymerizable therewith.

The polymer (A) in the composition for a nonaqueous secondary battery positive electrode according to this embodiment may be in the form of latex dispersed in the liquid medium (E), or may be in a state of being dissolved in the liquid medium (E), but is preferably in the form of latex dispersed in the liquid medium (E). A case in which the polymer (A) is in the form of latex dispersed in the liquid medium (E) is preferred because the stability of a slurry for a nonaqueous secondary battery positive electrode (hereinafter also referred to as "slurry for a positive electrode") produced by mixing the composition with an active material becomes satisfactory, and the applicability of the slurry for a positive electrode to a current collector becomes satisfactory.

The repeating units for forming the polymer (A), the physical properties of the polymer (A), and a production method therefor are described below in the stated order.

1.1.1. Repeating Units for forming Polymer (A)

1.1.1.1. Repeating Unit (a1) derived from Aromatic Vinyl Compound

The polymer (A) contains the repeating unit (a1) derived from the aromatic vinyl compound. When the total of the repeating units in the polymer (A) is defined as 100 mass%, the content ratio of the repeating unit (a1) derived from the aromatic vinyl compound is from 5 mass% to 75 mass%. The lower limit of the content ratio of the repeating unit (a1) is preferably 7 mass%, more preferably 10 mass%, particularly preferably 12 mass%. The upper limit of the content ratio of the repeating unit (a1) is preferably 70 mass%, more preferably 65 mass%, particularly preferably 60 mass%. When the polymer (A) contains the repeating unit (a1) at a content ratio in the ranges, a nonaqueous secondary battery showing a satisfactory repeated charge-discharge characteristic may be obtained because fusion between the particles of the polymer (A) dispersed in an active material layer is reduced, and hence the permeability of an electrolytic solution can be improved. Further, a positive electrode for a nonaqueous secondary battery excellent in adhesiveness may be obtained because the polymer shows a satisfactory binding force to ternary lithium nickel manganese cobalt oxide (hereinafter also referred to as "NMC"), lithium nickelate (hereinafter also referred to as "NCA"), or the like to be used as an active material.

The aromatic vinyl compound is not particularly limited, but examples thereof may include styrene, $\alpha$-methyl-styrene, p-methylstyrene, vinyltoluene, chlorostyrene, and divinylbenzene, and one or more kinds selected therefrom may be used.

1.1.1.2. Repeating Unit (a2) derived from Unsaturated Carboxylic Acid Ester

The polymer (A) contains the repeating unit (a2) derived from the unsaturated carboxylic acid ester. When the total of the repeating units in the polymer (A) is defined as 100 mass%, the content ratio of the repeating unit (a2) is from 20 mass% to 90 mass%. The lower limit of the content ratio of the repeating unit (a2) is preferably 23 mass%, more preferably 25 mass%, particularly preferably 27 mass%. The upper limit of the content ratio of the repeating unit (a2) is preferably 85 mass%, more preferably 80 mass%, particularly preferably 70 mass%. When the polymer (A) contains the repeating unit (a2) at a content ratio in the ranges, an affinity between the polymer (A) and the electrolytic solution becomes more satisfactory, and hence an increase in internal resistance caused by the fact that the polymer (A) serves as an electrical resistance component in a nonaqueous secondary battery can be reduced. In addition, a reduction in adhesiveness between a current collector and a positive electrode active material layer resulting from excessive absorption of the electrolytic solution by the polymer (A) can be effectively reduced.

Of the unsaturated carboxylic acid esters, a (meth)acrylic acid ester may be preferably used. Specific examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, ethylene glycol di(meth)acrylate, propylene glycol di(meth)acrylate, trimethylolpropane tri(meth) acrylate, pentaerythritol tetra(meth)acrylate, dipentaerythritol hexa(meth)acrylate, allyl (meth)acrylate, 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, glycerin mono(meth)acrylate, and glycerin di(meth)acrylate, and one or more kinds selected therefrom may be used. Of those, one or more kinds selected from methyl (meth)acrylate, ethyl (meth)acrylate, n-butyl (meth)acrylate, 2-ethylhexyl (meth)acrylate, cyclohexyl (meth)acrylate, ethylene glycol di(meth)acrylate, and 2-hydroxyethyl (meth)acrylate are preferred, and 2-ethylhexyl (meth)acrylate is particularly preferred.

1.1.1.3. Other Repeating Units

The polymer (A) may contain, in addition to the repeating unit (a1) and the repeating unit (a2), a repeating unit derived from another monomer copolymerizable therewith. Examples of such repeating unit include: a repeating unit (a3) derived from an unsaturated carboxylic acid (hereinafter also referred to simply as "repeating unit (a3)"); a repeating unit (a4) derived from a conjugated diene compound (hereinafter also referred to simply as "repeating unit (a4)"); a repeating unit (a5) derived from an $\alpha,\beta$-unsaturated nitrile compound (hereinafter also referred to simply as "repeating unit (a5)"); a repeating unit (a6) derived from a (meth)acrylamide (hereinafter also referred to simply as "repeating unit (a6)"); a repeating unit (a7) derived from a compound having a sulfonic acid group (hereinafter also referred to simply as "repeating unit (a7)"); and a repeating unit derived from a cationic monomer.

<Repeating Unit (a3) derived from Unsaturated Carboxylic Acid>

The polymer (A) may contain the repeating unit (a3) derived from the unsaturated carboxylic acid. When the total of the repeating units in the polymer (A) is defined as 100 mass%, the content ratio of the repeating unit (a3) derived from the unsaturated carboxylic acid is preferably from 0.1 mass% to 10 mass%. The lower limit of the content ratio of the repeating unit (a3) is more preferably 0.2 mass%, particularly preferably 0.5 mass%. The upper limit of the content ratio of the repeating unit (a3) is preferably 9 mass%, more preferably 8 mass%. When the polymer (A) contains the repeating unit (a3) at a content ratio in the ranges, an aggregate is hardly produced because the dispersion stability of the polymer (A) is excellent at the time of the preparation of the slurry for a positive electrode. In addition, an increase in viscosity of the slurry with time can be reduced.

The unsaturated carboxylic acid is not particularly limited, but examples thereof may include monocarboxylic acids and dicarboxylic acids (including anhydrides), such as acrylic acid, methacrylic acid, crotonic acid, maleic acid, fumaric acid, and itaconic acid, and one or more kinds selected therefrom may be used. One or more kinds selected from acrylic acid, methacrylic acid, and itaconic acid are each preferably used as the unsaturated carboxylic acid.

<Repeating Unit (a4) derived from Conjugated Diene Compound>

The polymer (A) may contain the repeating unit (a4) derived from the conjugated diene compound. When the total of the repeating units in the polymer (A) is defined as 100 mass%, the content ratio of the repeating unit (a4) derived from the conjugated diene compound is preferably from 5 mass% to 50 mass%. The lower limit of the content ratio of the repeating unit (a4) is more preferably 8 mass%, particularly preferably 10 mass%. The upper limit of the content ratio of the repeating unit (a4) is more preferably 40 mass%, particularly preferably 30 mass%. When the polymer (A) contains the repeating unit (a4) at a content ratio in the ranges, the dispersibility of a positive electrode active material or a conductive aid may become satisfactory to enable the production of a homogeneous positive electrode active material layer. Thus, the structural defect of an electrode plate is eliminated, and hence a satisfactory repeated charge-discharge characteristic is shown. In addition, stretching and shrinking properties can be imparted to the polymer (A) covering the surface of the positive electrode active material, and adhesiveness can be improved by the stretching and shrinking of the polymer (A). Accordingly, a satisfactory charge-discharge durability characteristic may be shown.
The conjugated diene compound is not particularly limited, but examples thereof include 1,3-butadiene, 2-methyl-1,3-butadiene, 2,3-dimethyl-1,3-butadiene, and 2-chloro-1,3-butadiene, and one or more kinds selected therefrom may be used. Of those, 1,3-butadiene is particularly preferred.

<Repeating Unit (a5) derived from $\alpha,\beta$-Unsaturated Nitrile Compound>

The polymer (A) may contain the repeating unit (a5) derived from the $\alpha,\beta$-unsaturated nitrile compound. When the total of the repeating units in the polymer (A) is defined as 100 mass%, the content ratio of the repeating unit (a5) is preferably from 0 mass% to 60 mass%. The lower limit of the content ratio of the repeating unit (a5) is more preferably 0.5 mass%, particularly preferably 1 mass%. The upper limit of the content ratio of the repeating unit (a5) is more preferably 55 mass%, particularly preferably 50 mass%. When the polymer (A) contains the repeating unit (a5) at a content ratio in the ranges, the polymer (A) becomes hardly soluble in an electrolytic solution, and hence a decrease in adhesiveness due to the electrolytic solution can be suppressed in some cases. In addition, an increase in internal resistance caused by the fact that a polymer component dissolved in a nonaqueous secondary battery serves as an electrical resistance component can be reduced in some cases.
The $\alpha,\beta$-unsaturated nitrile compound is not particularly limited, but examples thereof may include acrylonitrile, methacrylonitrile, $\alpha$-chloroacrylonitrile, $\alpha$-ethylacrylonitrile, and vinylidene cyanide, and one or more kinds selected therefrom may be used. Of those, one or more kinds selected from the group consisting of: acrylonitrile; and methacrylonitrile are preferred, and acrylonitrile is particularly preferred.

<Repeating Unit (a6) derived from (Meth)acrylamide>

The polymer (A) may contain the repeating unit (a6) derived from the (meth)acrylamide. When the total of the repeating units in the polymer (A) is defined as 100 mass%, the content ratio of the repeating unit (a6) is preferably from 0 mass% to 10 mass%. The lower limit of the content ratio of the repeating unit (a6) is more preferably 1 mass%, particularly preferably 2 mass%. The upper limit of the content ratio of the repeating unit (a6) is more preferably 8 mass%, particularly preferably 5 mass%. When the polymer (A) contains the repeating unit (a6) at a content ratio in the ranges, the dispersibility of a positive electrode active material in a slurry may become satisfactory. In addition, a positive electrode active material layer to be obtained may have moderate flexibility, and adhesiveness between a current collector and the positive electrode active material layer may be improved. Further, a binding ability between the molecules of an active material, such as NMC and NCA, can be enhanced, and hence a positive electrode active material layer that is more satisfactory in terms of flexibility and adhesiveness to a current collector may be obtained.
The (meth)acrylamide is not particularly limited, but examples thereof may include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, maleic acid amide, and acrylamide tert-butylsulfonic acid, and one or more kinds selected therefrom may be used.

<Repeating Unit (a7) derived from Compound having Sulfonic Acid Group>

The polymer (A) may contain the repeating unit (a7) derived from the compound having a sulfonic acid group.

When the total of the repeating units in the polymer (A) is defined as 100 mass%, the content ratio of the repeating unit (a7) is preferably from 0 mass% to 10 mass%. The lower limit of the content ratio of the repeating unit (a7) is more preferably 0.5 mass%, particularly preferably 1 mass%. The upper limit of the content ratio of the repeating unit (a7) is more preferably 8 mass%, particularly preferably 5 mass%.

The compound having a sulfonic acid group is not particularly limited, but examples thereof include compounds, such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, 2-hydroxy-3-acrylamidopropanesulfonic acid, and 3-allyloxy-2-hydroxypropanesulfonic acid, and alkali salts thereof, and one or more kinds selected therefrom may be used.

<Repeating Unit derived from Cationic Monomer>

The polymer (A) may contain the repeating unit derived from the cationic monomer. The cationic monomer is not particularly limited, but is preferably at least one kind of monomer selected from the group consisting of: a secondary amine (salt); a tertiary amine (salt); and a quaternary ammonium salt. Specific examples of those cationic monomers include, but not particularly limited to, 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1'-methylpropylidencamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer (A)

1.1.2.1. Glass Transition Temperature (Tg)

The polymer (A) preferably has an endothermic peak in the temperature range of from -40°C to 0°C when subjected to measurement by differential scanning calorimetry (DSC) in conformity with JIS K7121:2012. The lower limit of the temperature of the endothermic peak (i.e., the glass transition temperature (Tg) of the polymer) is more preferably -38°C, particularly preferably -35°C. The upper limit of the Tg is more preferably -3°C, particularly preferably -5°C. A case in which the number of the endothermic peaks of the polymer (A) in the DSC analysis is only one, and the peak temperature falls within the ranges is preferred because the polymer (A) shows satisfactory adhesiveness, and more satisfactory flexibility and a more satisfactory pressure-sensitive adhesive property can be imparted to the positive electrode active material layer.

1.1.2.2. Swelling Ratio

A swelling ratio when the polymer (A) is immersed in a solvent formed of propylene carbonate and diethyl carbonate at a volume fraction of 1:1 under the conditions of 70°C and 24 hours is preferably 100% or more and 350% or less. The lower limit of the swelling ratio is more preferably 130%, particularly preferably 150%. The upper limit of the swelling ratio is more preferably 320%, particularly preferably 300%. When the swelling ratio falls within the ranges, the polymer (A) can swell moderately with an electrolytic solution. As a result, solvated lithium ions can easily reach an active material, and hence a more satisfactory repeated charge-discharge characteristic can be achieved through a reduction in internal resistance of a positive electrode for a nonaqueous secondary battery. In addition, with the swelling ratio within the ranges, the polymer (A) does not cause a large volume change, and is hence excellent in adhesiveness. The swelling ratio of the polymer (A) may be measured by a method described in Examples to be described later.

1.1.2.3. Number Average Particle Diameter

When the polymer (A) is particles, the number average particle diameter of the particles is preferably 50 nm or more and 800 nm or less. The lower limit of the number average particle diameter is more preferably 60 nm, particularly preferably 70 nm. The upper limit of the number average particle diameter is more preferably 650 nm, particularly preferably 500 nm. When the number average particle diameter of the particles of the polymer (A) falls within the ranges, the particles of the polymer (A) are easily adsorbed onto the surface of the positive electrode active material, and hence the particles of the polymer (A) can also move following the movement of the positive electrode active material. As a result, migration can be reduced, and hence a degradation in electrical characteristic can be reduced in some cases. The number average particle diameter of the polymer (A) may be measured by a method described in Examples to be described later.

1.1.2.4. Surface Acidity

When the polymer (A) is particles, the surface acidity of the particles is preferably 0.05 mmol/g or more and 6 mmol/g or less. The lower limit of the surface acidity is more preferably 0.06 mmol/g, particularly preferably 0.07 mmol/g. The upper limit of the surface acidity is more preferably 5.8 mmol/g, particularly preferably 5.5 mmol/g. When the surface acidity of the particles of the polymer (A) falls within the ranges, a stable and homogeneous slurry for a positive electrode can be produced. When the positive electrode active material layer is produced by using such homogeneous slurry for a positive electrode, a positive electrode active material layer in which the positive electrode active material and the particles of the polymer (A) are uniformly dispersed to reduce thickness variation is obtained. As a result, variation in charge-discharge characteristic in an electrode can be reduced, and hence a positive electrode for a nonaqueous secondary battery showing a satisfactory charge-discharge characteristic is obtained. The surface acidity of the polymer (A) may be measured by a method described in Examples to be described later.

1.1.3. Production Method for Polymer (A)

A production method for the polymer (A) is not particularly limited, but for example, the polymer (A) may be produced by an emulsion polymerization method to be performed in the presence of a known emulsifier (surfactant), chain transfer agent, polymerization initiator, and the like. Compounds described in JP 5999399 B2 and the like may be used as the emulsifier (surfactant), the chain transfer agent, and the polymerization initiator.

The emulsion polymerization method for synthesizing the polymer (A) may be performed by one-stage polymerization, or may be performed by multistage polymerization involving two or more stages of polymerization.

When the synthesis of the polymer (A) is performed by one-stage polymerization, a mixture of the above-mentioned monomers may be subjected to emulsion polymerization in the presence of an appropriate emulsifier, chain transfer agent, polymerization initiator, and the like at preferably from 40°C to 85°C for preferably from 4 hours to 36 hours.

When the synthesis of the polymer (A) is performed by two-stage polymerization, the polymerization of each stage is preferably set as described below.

The usage ratio of monomers to be used in the first stage polymerization is set to fall within preferably the range of from 5 mass% to 95 mass%, more preferably the range of from 10 mass% to 90 mass% with respect to the total mass of monomers (sum of the mass of the monomers to be used in the first stage polymerization and the mass of monomers to be used in the second stage polymerization). A case in which the first stage polymerization is performed at such usage ratio of the monomers is preferred because particles of the polymer (A) that are excellent in dispersion stability, and hence hardly cause aggregation can be obtained, and an increase in viscosity of the composition for a nonaqueous secondary battery positive electrode with time is reduced.

The kinds and usage ratio of the monomers to be used in the second stage polymerization may be the same as or different from the kinds and usage ratio of the monomers to be used in the first stage polymerization.

Polymerization conditions in each stage are preferably set as described below from the viewpoint of the dispersibility of the particles of the polymer (A) to be obtained.

- First stage polymerization: a temperature of preferably from 40°C to 85°C; a polymerization time of preferably from 1 hour to 36 hours; and a polymerization conversion rate of preferably 50 mass% or more, more preferably 60 mass% or more.
- Second stage polymerization: a temperature of preferably from 40°C to 85°C; and a polymerization time of preferably from 2 hours to 18 hours.

When a total solid content concentration in the emulsion polymerization is set to 50 mass% or less, the polymerization reaction can be allowed to proceed under a state in which the dispersion stability of the particles of the polymer (A) to be obtained is satisfactory. The total solid content concentration is preferably 48 mass% or less, more preferably 45 mass% or less.

Irrespective of whether the synthesis of the polymer (A) is performed as one-stage polymerization or by a two-stage polymerization method, after the completion of the emulsion polymerization, a neutralizer is preferably added to the polymerization mixture to adjust its pH to from about 5 to about 10, preferably from 6 to 9.5, more preferably from 6.5 to 9. The neutralizer to be used in this case is not particularly limited, but examples thereof include: metal hydroxides, such as sodium hydroxide and potassium hydroxide; and ammonia. When the pH is set to fall within the above-mentioned ranges, the stability of the polymer (A) becomes satisfactory. When the polymerization mixture is subjected to neutralization treatment before being concentrated, its solid content concentration can be increased while satisfactory stability of the polymer (A) is maintained.

### 1.1.4. Content Ratio of Polymer (A)

The content ratio of the polymer (A) in the composition for a nonaqueous secondary battery positive electrode according to this embodiment is preferably from 10 mass% to 90 mass%, more preferably from 25 mass% to 85 mass%, particularly preferably from 50 mass% to 80 mass% in 100 mass% of a polymer component. Herein, the polymer component includes, for example, the polymer (A), the polyamine compound (B), and a polymer except the polymer (A) and a thickener, which are described later.

### 1.2. Polyamine Compound (B) and Boron-containing Compound (C)

The composition for a nonaqueous secondary battery positive electrode according to this embodiment includes at least one kind selected from the group consisting of: the polyamine compound (B); and the boron-containing compound (C). When the composition includes such compound, an affinity between the positive electrode active material and the polymer (A) becomes more satisfactory, and hence flexibility and adhesiveness can be imparted to a positive electrode for a nonaqueous secondary battery. In addition, an increase in pH of the slurry for a positive electrode due to the elution of the positive electrode active material in the slurry for a positive electrode can be reduced by the buffer action of such compound. The respective compounds are described below.

### 1.2.1. Polyamine Compound (B)

When the composition for a nonaqueous secondary battery positive electrode includes the polyamine compound (B), the content ratio of the polyamine compound (B) in the composition is preferably from 1 part by mass to 60 parts by mass, more preferably from 2 parts by mass to 55 parts by mass, particularly preferably from 3 parts by mass to 50 parts by mass with respect to 100 parts by mass of the polymer (A). When the composition includes the polyamine compound (B) at a content ratio in the ranges, the polyamine compound (B) covers the surface of the positive electrode active material in the slurry for a positive electrode to reduce the elution of the positive electrode active material. In addition, the increase in pH due to the elution of the positive electrode active material can be reduced by the buffer action of the polyamine compound (B). In addition, flexibility and adhesiveness can be imparted to the positive electrode for a nonaqueous secondary battery because the polyamine compound (B) that is linear or networked is widely distributed on the surface of the positive electrode active material and the surface of the polymer (A).

The polyamine compound (B) is not particularly limited, but examples thereof may include polyethyleneimine, polytetramethyleneimine, polyvinylamine, and polyallylamine, and one or more kinds selected therefrom may be used.

### 1.2.2. Boron-containing Compound (C)

When the composition for a nonaqueous secondary battery positive electrode includes the boron-containing compound (C), the content ratio of the boron-containing compound (C) in the composition is preferably from 5 part by mass to 80 parts by mass, more preferably from 8 parts by mass to 70 parts by mass, particularly preferably from 10 parts by mass to 60 parts by mass with respect to 100 parts by mass of the polymer (A). When the composition includes the boron-containing compound (C) at a content ratio in the ranges, the affinity between the positive electrode active material and the polymer (A) becomes more satisfactory, and hence flexibility and adhesiveness can be imparted to the positive electrode for a nonaqueous secondary battery. In addition, the increase in pH due to the elution of the positive electrode active material in the slurry for a positive electrode can be reduced by the buffer action of the boric acid-containing compound (C).

The boron-containing compound (C) is not particularly limited, but boric acid and salts thereof are preferred. Examples of boric acid and the salts thereof may include boric acid, lithium tetraborate, sodium tetraborate, and potassium tetraborate, and one or more kinds selected therefrom may be used.

### 1.3. Acidic Compound (D)

The composition for a nonaqueous secondary battery positive electrode according to this embodiment may include an acidic compound (D). When the composition for a nonaqueous secondary battery positive electrode according to this embodiment includes the polyamine compound (B), the acidic compound (D) is preferably used in combination therewith. In the case where the polyamine compound (B) and the acidic compound (D) are used in combination, when the content of the polyamine compound (B) is represented by Mb parts by mass, and the content of the acidic compound (D) is represented by Md parts by mass, the value of the ratio "Mb/Md" is preferably from 0.1 to 10.0, more preferably from 0.2 to 7.0, particularly preferably from 0.3 to 5.0. When the value of the ratio "Mb/Md" falls within the ranges, the dispersibility of the polyamine compound (B) can be improved. Thus, the polyamine compound (B) is more widely distributed on the surface of the positive electrode active material and the surface of the polymer (A), and hence flexibility and adhesiveness can be imparted to the positive electrode for a nonaqueous secondary battery. In addition, the initial pH of the slurry for a positive electrode can be reduced, and hence the corrosion of the positive electrode for a nonaqueous secondary battery due to an increase in pH thereof can be reduced.

The acidic compound (D) is not particularly limited, but examples thereof may include malonic acid, succinic acid, sulfuric acid, phosphoric acid, and ammonium sulfate, and one or more kinds selected therefrom may be used.

1.4. Liquid Medium (E)

The composition for a nonaqueous secondary battery positive electrode according to this embodiment includes the liquid medium (E). The liquid medium (E) is preferably an aqueous medium containing water, and is more preferably water. The aqueous medium may contain a nonaqueous medium except water. Examples of the nonaqueous medium may include an amide compound, a hydrocarbon, an alcohol, a ketone, an ester, an amine compound, a lactone, a sulfoxide, and a sulfone compound, and one or more kinds selected therefrom may be used. When the composition for a nonaqueous secondary battery positive electrode according to this embodiment uses the aqueous medium as the liquid medium (E), the composition adversely affects an environment to a less degree and is highly safe for a worker who handles the composition.

The content ratio of the nonaqueous medium in the aqueous medium is preferably 10 mass% or less, more preferably 5 mass% or less in 100 mass% of the aqueous medium. It is particularly preferred that the aqueous medium be substantially free of the nonaqueous medium. Herein, the phrase "be substantially free" merely means that the nonaqueous medium is not intentionally added as the liquid medium (E), and the aqueous medium may contain the nonaqueous medium that is inevitably mixed during the preparation of the composition for a nonaqueous secondary battery positive electrode.

1.5. Other Additives

The composition for a nonaqueous secondary battery positive electrode according to this embodiment may include an additive except the above-mentioned components as required. Examples of such additive include a polymer except the polymer (A), a preservative, and a thickener.

1.5.1. Polymer except Polymer (A)

The composition for a nonaqueous secondary battery positive electrode according to this embodiment may include a polymer except the polymer (A). Such polymer is not particularly limited, but examples thereof include: an acrylic polymer containing an unsaturated carboxylic acid ester or a derivative thereof as a constituent unit; and a fluoropolymer such as polyvinylidene fluoride (PVDF). Those polymers may be used alone or in combination thereof. The incorporation of such polymer further improves flexibility and adhesiveness in some cases.

1.5.2. Preservative

The composition for a nonaqueous secondary battery positive electrode according to this embodiment may include a preservative. The incorporation of the preservative can reduce the generation of foreign matter due to the growth of bacteria, mold, or the like during the storage of the composition for a nonaqueous secondary battery positive electrode in some cases. Specific examples of the preservative include compounds described in JP 5477610 B1.

1.5.3. Thickener

The composition for a nonaqueous secondary battery positive electrode according to this embodiment may include a thickener. The incorporation of the thickener can further improve the applicability of a slurry for a positive electrode, the charge-discharge characteristic of a nonaqueous secondary battery to be obtained, and the like in some cases.

Specific examples of the thickener may include: cellulose compounds, such as carboxymethyl cellulose, methyl cellulose, and hydroxypropyl cellulose; poly(meth)acrylic acid; ammonium salts or alkali metal salts of the cellulose compound or the poly(meth)acrylic acid; polyvinyl alcohol-based (co)polymers, such as polyvinyl alcohol, modified polyvinyl alcohol, and an ethylene-vinyl alcohol copolymer; and water-soluble polymers such as a saponified product of a copolymer of an unsaturated carboxylic acid, such as (meth)acrylic acid, maleic acid, or fumaric acid, and a vinyl ester. Of those, an alkali metal salt of carboxymethyl cellulose, an alkali metal salt of poly(meth)acrylic acid, and the like are preferred.

As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).

When the composition for a nonaqueous secondary battery positive electrode according to this embodiment includes the thickener, the content ratio of the thickener is preferably 5 mass% or less, more preferably from 0.1 mass% to 4 mass% with respect to 100 mass% of the total solid content of the composition for a nonaqueous secondary battery positive electrode.

1.6. pH of Composition for Nonaqueous Secondary Battery Positive Electrode

The pH of the composition for a nonaqueous secondary battery positive electrode according to this embodiment is preferably from 5.0 to 10.5, more preferably from 6.0 to 10.0, particularly preferably from 6.5 to 9.5. When the pH falls within the ranges, the occurrence of a problem, such as lack of a leveling property or liquid dripping, can be reduced, and hence a positive electrode for a nonaqueous secondary battery achieving both of a satisfactory electrical characteristic and satisfactory adhesiveness is easily produced.

Herein, the "pH" refers to a physical property measured as described below: a value measured at 25°C in conformity to JIS Z8802:2011 with a pH meter using a glass electrode calibrated with a neutral phosphate standard solution and a borate standard solution serving as pH standard solutions. Examples of such pH meter include "HM-7J" manufactured by DKK-TOA Corporation and "D-51" manufactured by Horiba, Ltd.

It is not denied that the pH of the composition for a nonaqueous secondary battery positive electrode is affected by the composition of the monomers for forming the polymer (A), but it should be noted that the pH is not determined by the monomer composition alone. That is, it is known that the pH of a composition for a nonaqueous secondary battery positive electrode generally varies depending on polymerization conditions and the like even for the same monomer composition, and Examples herein are merely some examples thereof.

For example, even for the same monomer composition, the case of loading all the unsaturated carboxylic acid into a polymerization reaction liquid at the beginning, and then sequentially adding the other monomers, and the case of loading the monomers except the unsaturated carboxylic acid into a polymerization reaction liquid, and finally adding the unsaturated carboxylic acid give different amounts of carboxy groups derived from the unsaturated carboxylic acid exposed on the surface of the polymer to be obtained. Thus, it is conceivable that the pH of the composition for a nonaqueous secondary battery positive electrode is significantly changed merely by changing the order in which the monomers are added in the polymerization method.

2. Slurry for Nonaqueous Secondary Battery Positive Electrode

A slurry for a nonaqueous secondary battery positive electrode according to one embodiment of the present invention includes: the above-mentioned composition for a nonaqueous secondary battery positive electrode; and a positive electrode active material. The above-mentioned composition for a nonaqueous secondary battery positive electrode is used as a material for producing a positive electrode (positive electrode active material layer) for a nonaqueous secondary battery improved in: binding ability between the molecules of the positive electrode active material; adhesive ability between the positive electrode active material and a current collector; and powder fall-off resistance. The positive electrode for a nonaqueous secondary battery is produced by: applying the above-mentioned slurry for a nonaqueous secondary battery positive electrode to the surface of the current collector; and then drying the slurry to form the positive electrode active material layer on the surface of the current collector.

The slurry for a nonaqueous secondary battery positive electrode according to this embodiment can improve flexibility and adhesiveness even when the slurry includes only the above-mentioned polymer (A) as a polymer component. Of course, the slurry for a nonaqueous secondary battery positive electrode according to this embodiment may include a polymer except the polymer (A) and a thickener to further improve adhesiveness.

The components that may be incorporated into the slurry for a nonaqueous secondary battery positive electrode according to this embodiment are described below.

2.1. Composition for Nonaqueous Secondary Battery Positive Electrode

The composition for a nonaqueous secondary battery positive electrode is as described above, and hence the description thereof is omitted.

The content ratio of the polymer component in the slurry for a nonaqueous secondary battery positive electrode according to this embodiment is preferably from 1 part by mass to 8 parts by mass, more preferably from 1 part by mass to 7 parts by mass, particularly preferably from 1.5 parts by mass to 6 parts by mass with respect to 100 parts by mass of the positive electrode active material. When the content ratio of the polymer component falls within the ranges, the dispersibility of the positive electrode active material in the slurry for a positive electrode becomes satisfactory, and the applicability of the slurry for a positive electrode becomes excellent. Herein, the polymer component includes, for example, the polymer (A), the polyamine compound (B), the polymer except the polymer (A), and the thickener.

### 2.2. Positive Electrode Active Material

Examples of the positive electrode active material to be used in the slurry for a nonaqueous secondary battery positive electrode according to this embodiment include an oxide containing a lithium atom, a lead compound, a tin compound, an arsenic compound, an antimony compound, an aluminum compound, a conductive polymer such as polyacene, a composite metal oxide represented by $A_X B_Y O_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of $1.10 > X > 0.05$, $4.00 > Y > 0.85$, and $5.00 > Z > 1.5$, respectively), and other metal oxides. Specific examples thereof include compounds described in JP 5999399 B2.

Examples of the oxide containing a lithium atom include one or more kinds selected from lithium atom-containing oxides (olivine-type lithium-containing phosphoric acid compounds) each of which is represented by the following general formula (1) and has an olivine-type crystal structure.

$$Li_{1-x}M_x(AO_4) \qquad \cdots (1)$$

(In the formula (1), M represents an ion of at least one kind of metal selected from a group consisting of Mg, Ti, V, Nb, Ta, Cr, Mn, Fe, Co, Ni, Cu, Zn, Al, Ga, Ge, and Sn, A represents at least one kind selected from a group consisting of Si, S, P, and V, and "x" represents a number satisfying the relationship of $0 < x < 1$.)

The value of "x" in the general formula (1) is selected in accordance with the valences of M and A so that the valence of the entirety of the general formula (1) may be zero-valent.

Examples of the olivine-type lithium-containing phosphoric acid compound include $LiFePO_4$, $LiCoPO_4$, $LiMnPO_4$, and $Li_{0.90}Ti_{0.05}Nb_{0.05}Fe_{0.30}Co_{0.30}Mn_{0.30}PO_4$. Of those, $LiFePO_4$ (lithium iron phosphate) is particularly preferred because an iron compound serving as a raw material therefor is easily available and inexpensive.

The average particle diameter of the olivine-type lithium-containing phosphoric acid compound preferably falls within the range of from 1 $\mu$m to 30 $\mu$m, more preferably falls within the range of from 1 $\mu$m to 25 $\mu$m, and particularly preferably falls within the range of from 1 $\mu$m to 20 $\mu$m.

Examples of the composite metal oxide include lithium cobaltate, lithium nickelate, lithium manganate, and ternary lithium nickel cobalt manganese oxide.

When a liquid medium containing water as a main component is used at the time of the production of the slurry for a positive electrode, there has occurred a problem in that a positive electrode to be obtained is poor in charge-discharge characteristic. It has been known that the positive electrode active material has high reactivity with water, and hence the corrosion of the surface of the positive electrode by a hydroxide ion produced by a reaction between the positive electrode active material and the water is considered to be one factor for the poor characteristic.

However, the positive electrode for a nonaqueous secondary battery produced by using the slurry for a nonaqueous secondary battery positive electrode according to this embodiment can show a satisfactory charge-discharge characteristic because such a problem as described above does not occur even when the slurry for a positive electrode using the liquid medium containing water as a main component is used. A possible reason for the foregoing is as follows: the hydroxide ion produced by the reaction between the positive electrode active material and the water is buffered by the polyamine compound (B) and/or the boron-containing compound (C), and hence the corrosion of the surface of the positive electrode due to an increase in pH of the slurry can be reduced.

The positive electrode active material preferably has a particulate shape. The average particle diameter of the positive electrode active material is preferably from 0.1 $\mu$m to 100 $\mu$m, more preferably from 1 $\mu$m to 20 $\mu$m. Herein, the average particle diameter of the positive electrode active material refers to a volume average particle diameter calculated from a particle size distribution, the particle size distribution being measured with a particle size distribution-measuring apparatus employing a laser diffraction method as its measurement principle. Examples of such laser diffraction particle size distribution-measuring apparatus include the HORIBA LA-300 series and the HORIBA LA-920 series (which are manufactured by Horiba, Ltd.).

The positive electrode active material is preferably used at such a ratio that the content ratio of the polymer (A) with respect to 100 parts by mass of the positive electrode active material is from 0.5 part by mass to 8 parts by mass. The active material is more preferably used at such a ratio that the content ratio is from 1 part by mass to 6 parts by mass. The active material is particularly preferably used at such a ratio that the content ratio is from 2 parts by mass to 4 parts by mass.

When the active material is used at such ratio, there can be produced a nonaqueous secondary battery positive electrode, which is more excellent in adhesiveness, has a small electrode resistance, and is more excellent in charge-discharge characteristic.

2.3. Other Components

In addition to the above-mentioned components, other components may be added to the slurry for a nonaqueous secondary battery positive electrode according to this embodiment as required. Examples of such components include a polymer except the polymer (A), a thickener, a liquid medium, a conductivity-imparting agent, a corrosion inhibitor, and a cellulose fiber. The polymer except the polymer (A) and the thickener may be appropriately selected from the compounds given as examples in the section "1.5. Other Additives," and may be used for similar purposes and at similar content ratios.

<Liquid Medium>

A liquid medium may be further added to the slurry for a nonaqueous secondary battery positive electrode according to this embodiment in addition to the liquid medium included in the composition for a nonaqueous secondary battery positive electrode. The liquid medium to be added may be the same kind of liquid medium as the liquid medium (E) included in the composition for a nonaqueous secondary battery positive electrode or may be different therefrom, but a liquid medium selected from the liquid media given as examples in the section "1.4. Liquid Medium (E)" is preferably used.

The content ratio of the liquid medium (including the liquid medium included in the composition for a nonaqueous secondary battery positive electrode) in the slurry for a nonaqueous secondary battery positive electrode according to this embodiment is set to such a ratio that the solid content concentration in the slurry for a positive electrode (which refers to the ratio of the total mass of the components except the liquid medium in the slurry for a positive electrode to the total mass of the slurry for a positive electrode; the same applies hereinafter) becomes preferably from 30 mass% to 85 mass%, more preferably from 40 mass% to 80 mass%.

<Conductive Aid>

A conductive aid may be further added to the slurry for a nonaqueous secondary battery positive electrode according to this embodiment for the purposes of imparting conductivity and buffering the volume change of the active material caused by the entrance and exit of lithium ions.

Specific examples of the conductive aid include carbons, such as activated carbon, acetylene black, ketjen black, furnace black, black lead, a carbon fiber, a fullerene, and a carbon nanotube. Of those, acetylene black or a carbon nanotube may be preferably used. The content ratio of the conductive aid is preferably 20 parts by mass or less, more preferably from 1 part by mass to 15 parts by mass, particularly preferably from 2 parts by mass to 10 parts by mass with respect to 100 parts by mass of the positive electrode active material.

<Corrosion Inhibitor>

A corrosion inhibitor may be further added to the slurry for a nonaqueous secondary battery positive electrode according to this embodiment for the purpose of reducing the corrosion of a current collector depending on the kind of the positive electrode active material.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

<Cellulose Fiber>

A cellulose fiber may be further added to the slurry for a nonaqueous secondary battery positive electrode according to this embodiment. The addition of the cellulose fiber can improve the adhesiveness of the positive electrode active material with respect to a current collector in some cases. It is conceivable that the fibrous cellulose fiber fibrously binds the adjacent molecules of the positive electrode active material to each other by linear adhesion or linear contact, and hence can prevent the detachment of the positive electrode active material and can improve the adhesiveness thereof with respect to a current collector.

2.4. Preparation Method for Slurry for Nonaqueous Secondary Battery Positive Electrode

The slurry for a nonaqueous secondary battery positive electrode according to this embodiment may be a slurry produced by any method as long as the slurry includes the above-mentioned composition for a nonaqueous secondary battery positive electrode and a positive electrode active material. From the viewpoint of more efficiently and inexpensively producing a slurry having more satisfactory dispersibility and more satisfactory stability, the slurry is preferably produced by adding the positive electrode active material and optionally added components to be used as required to the composition for a nonaqueous secondary battery positive electrode, and mixing the components. A specific example of the production method is a method described in JP 6544150 B2 or the like.

3. Positive Electrode for Nonaqueous Secondary Battery

A positive electrode for a nonaqueous secondary battery according to one embodiment of the present invention includes a current collector and an active material layer formed on the surface of the current collector by applying and drying the above-mentioned slurry for a nonaqueous secondary battery positive electrode. Such positive electrode for a nonaqueous secondary battery may be produced by applying the above-mentioned slurry for a nonaqueous secondary battery positive electrode to the surface of the current collector such as metal foil to form a coating film, and then drying the coating film to form the positive electrode active material layer. The positive electrode for a nonaqueous secondary battery produced as described above is obtained by binding, to the surface of the current collector, the positive electrode active material layer, which contains the polymer (A), the polyamine compound (B) and/or the boron-containing compound (C), and the positive electrode active material described above, and an optional component to be added as required. Accordingly, the occurrence of the corrosion of the surface of the electrode is reduced and the adhesiveness thereof is excellent, and hence the charge-discharge durability characteristic of a nonaqueous secondary battery can be improved.

The current collector is not particularly limited as long as the current collector is formed of a conductive material. However, when the positive electrode for a nonaqueous secondary battery is used in a lithium ion secondary battery, a current collector made of a metal, such as iron, copper, aluminum, nickel, or stainless steel, may be used. In particular, a current collector made of aluminum or copper is preferred.

When the positive electrode for a nonaqueous secondary battery is used in a nickel-hydrogen secondary battery, a current collector formed of, for example, a perforated metal, an expanded metal, a wire mesh, a foam metal, a networked metal fiber sintered body, or a metal-plated resin plate may be used.

Although the shape and thickness of the current collector are not particularly limited, for example, a sheet-like current collector having a thickness of from about 0.001 mm to about 0.5 mm is preferred. When the slurry for a nonaqueous secondary battery positive electrode is applied to the surface of the current collector, a method for the application is not particularly limited. For example, a doctor blade method, a dipping method, a reverse roll method, a direct roll method, a gravure method, an extrusion method, an immersion method, or a brushing method may be appropriately used as an application method.

The application amount of the slurry for a nonaqueous secondary battery positive electrode is not particularly limited. Such an application amount that the thickness of the positive electrode active material layer, which is formed after the application of the slurry for a nonaqueous secondary battery positive electrode and the removal of its liquid medium (concept encompassing both of water and a nonaqueous medium to be optionally used), is from 0.005 mm to 5 mm is preferred, and such an application amount that the thickness is from 0.01 mm to 2 mm is more preferred.

When the thickness of the positive electrode active material layer falls within the ranges, an electrolytic solution can be efficiently impregnated into the positive electrode active material layer. As a result, a metal ion exchange between the positive electrode active material in the positive electrode active material layer and the electrolytic solution along with the charging and discharging of the battery is easily performed, and hence the internal resistance of the positive electrode can be further reduced.

In addition, when the thickness of the positive electrode active material layer falls within the ranges, even in the case where the positive electrode is processed by being, for example, folded or wound, the adhesiveness between the positive electrode active material layer and the current collector is satisfactory, and hence the positive electrode active material layer hardly peels from the current collector. That is, a positive electrode for a nonaqueous secondary battery rich in flexibility can be obtained.

A method of drying the coating film formed by applying the slurry for a nonaqueous secondary battery positive electrode (method of removing water and a nonaqueous medium to be optionally used) is not particularly limited. For example, there may be used a method, such as drying with a warm wind, a hot wind, or a low-humidity wind, vacuum drying, or drying by irradiation with a (far-)infrared ray or an electron beam.

A drying rate at the time of the drying of the coating film formed by applying the slurry for a nonaqueous secondary battery positive electrode may be appropriately set so that the liquid medium can be removed as quickly as possible under, for example, such a condition that a crack is not formed in the positive electrode active material layer by stress concentration, or the positive electrode active material layer does not peel from the current collector.

After the drying of the coating film formed by applying the slurry for a nonaqueous secondary battery positive electrode, the positive electrode for a nonaqueous secondary battery is preferably pressed to increase the density of the positive electrode active material layer, to thereby adjust the density and a porosity in the positive electrode active material layer within the following ranges.

The density of the positive electrode active material layer after the pressing is preferably from 2.2 g/cm$^3$ to 3.6 g/cm$^3$, more preferably from 2.3 g/cm$^3$ to 3.5 g/cm$^3$, still more preferably from 2.4 g/cm$^3$ to 3.4 g/cm$^3$, particularly preferably from 2.5 g/cm$^3$ to 3.3 g/cm$^3$. When the density of the positive electrode active material layer is set within the ranges, there can be obtained a positive electrode for a nonaqueous secondary battery, which has a satisfactory binding property between the current collector and the positive electrode active material layer, is excellent in powder fall-off resistance, and is also excellent in electrical characteristic.

The porosity of the positive electrode active material layer after the pressing is preferably from 10% to 50%, more preferably from 15% to 45%, particularly preferably from 20% to 40%. When the porosity of the positive electrode active material layer is set within the ranges, there can be obtained a positive electrode for a nonaqueous secondary battery, which has a satisfactory binding property between the current collector and the positive electrode active material layer, is excellent in powder fall-off resistance, and is also excellent in electrical characteristic.

In addition, when the porosity of the positive electrode active material layer is set within the ranges, the electrolytic solution can be sufficiently impregnated into the positive electrode active material layer, and hence the surface of the positive electrode active material and the electrolytic solution are sufficiently brought into contact with each other. As a result, a lithium ion exchange between the positive electrode active material and the electrolytic solution is facilitated, and hence the positive electrode can express a satisfactory charge-discharge characteristic.

A pressing method is, for example, a method, such as mold pressing or roll pressing. Conditions for the pressing may be appropriately set in accordance with, for example, the kind of a press tool to be used, and the desired values of the porosity and density of the positive electrode active material layer. The conditions for the pressing may be easily set through a preliminary experiment to be performed a small number of times by a person skilled in the art.

Conditions for the pressing when a roll pressing method is used may be set, for example, as described below.

- Linear pressure of roll pressing machine: from 0.1 (t/cm) to 10 (t/cm), preferably from 0.5 (t/cm) to 5 (t/cm)
- Roll temperature: from 20°C to 100°C
- Feed rate of positive electrode for nonaqueous secondary battery (rotational speed of roll): from 0.5 m/min to 50 m/min, preferably from 1 m/min to 30 m/min

4. Nonaqueous Secondary Battery

A nonaqueous secondary battery according to one embodiment of the present invention includes the above-mentioned positive electrode for a nonaqueous secondary battery and further includes an electrolytic solution, and may be produced in accordance with a conventional method through use of parts such as a separator. A specific example of the production method may be a method including: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, for example, a coin shape, a cylindrical shape, a square shape, or a laminate shape.

The electrolytic solution may be liquid or gel, and an electrolytic solution effectively expressing a function as a battery only needs to be selected from known electrolytic solutions to be used in nonaqueous secondary batteries in accordance with the kind of the active material. The electrolytic solution may be a solution obtained by dissolving an electrolyte in an appropriate solvent. Examples of such electrolyte and solvent include compounds described in JP 5999399 B2.

The above-mentioned nonaqueous secondary battery may be applied to, for example, a lithium ion secondary battery, an electric double layer capacitor, and a lithium ion capacitor each of which needs to be discharged at a high current density. Of those, a lithium ion secondary battery is particularly preferred. In the positive electrode for a nonaqueous secondary battery and the nonaqueous secondary battery according to the above-mentioned embodiments, known members for lithium ion secondary batteries, for electric double layer capacitors, and for lithium ion capacitors may be used as members except the composition for a nonaqueous secondary battery positive electrode.

The negative electrode of the nonaqueous secondary battery according to this embodiment includes, for example, a current collector and a negative electrode active material layer formed on its surface. The negative electrode active material layer contains a negative electrode active material. The negative electrode may be produced by, for example, applying a slurry for a negative electrode to be used in the production of a negative electrode, the slurry containing the negative electrode active material, to the surface of the current collector, and drying the slurry to form the negative electrode active material layer.

The slurry for a negative electrode may contain, for example, the polymer except the polymer (A), the thickener, the liquid medium, the conductivity-imparting agent, a pH adjusting agent, the corrosion inhibitor, or the cellulose fiber described in the section "2.3. Other Components" in addition to a known negative electrode active material.

5. Examples

The present invention is specifically described below by way of Examples, but the present invention is by no means limited to these Examples. The terms "part(s)" and "%" in Polymerization Examples, Examples, and Comparative Examples are by mass unless otherwise stated.

5.1. Polymerization Example and Physical Property Evaluation of Polymer (A)

5.1.1. Polymerization Example of Polymer (A)

<Polymerization Example 1>

85 Parts by mass of water and 0.1 part by mass of sodium di(2-ethylhexyl)sulfosuccinate were loaded into a separable flask, and air in the separable flask was sufficiently purged with nitrogen.

Meanwhile, 45 parts by mass of water, 0.5 part by mass of sodium di(2-ethylhexyl)sulfosuccinate, and 75 parts by mass of styrene (ST), 19.5 parts by mass of 2-ethylhexyl acrylate (2EHA), 4 parts by mass of butyl acrylate (BA), 0.5 part by mass of triethylene glycol dimethacrylate (TEGDMA), and 1 part by mass of acrylic acid (AA) serving as monomers were loaded into another container, and were sufficiently stirred to prepare a monomer emulsion containing the mixture of the above-mentioned monomers.

10 Percent of the above-mentioned monomer emulsion was added to the separable flask. An increase in temperature in the separable flask was started, and at the time point when the temperature therein reached 75°C, 0.1 part by mass of potassium persulfate was added as a polymerization initiator thereto. After the contents in the flask had been subjected to a reaction for 1 hour, the remainder of the above-mentioned monomer emulsion was slowly added thereto over 2 hours. After that, the temperature in the separable flask was increased to 85°C, and while the temperature was maintained for 3 hours, a polymerization reaction was performed. 3 Hours thereafter, the separable flask was cooled so that the reaction was stopped. After that, an aqueous solution of sodium hydroxide was added to adjust the pH of the reaction product to 8.0. Thus, an aqueous dispersion containing 40 mass% of particles formed of a polymer (A-1) was obtained.

<Polymerization Examples 2 to 10>

The loaded monomer components were changed to monomers shown in Table 1 below. The components were subjected to a reaction by the same method as that of Polymerization Example 1 except the foregoing to provide respective aqueous dispersions each containing 40 mass% of particles formed of each polymer.

5.1.2. Physical Property Evaluation of Polymer (A)

The number average particle diameter, swelling ratio, and surface acidity of each of the polymers obtained in the foregoing were measured. In the measurement of each of the number average particle diameter and the surface acidity, the aqueous dispersion of the polymer (A) was used as a measurement sample. The results are shown in Table 1 below.

<Number Average Particle Diameter>

One droplet of latex obtained by diluting the aqueous dispersion of the polymer (A) obtained in the foregoing to 0.1 wt% was dropped onto a collodion support film with a pipette, and one droplet of a 0.02 wt% osmium tetroxide solution was further dropped onto the collodion support film with a pipette, followed by air drying for 12 hours to prepare a sample. The sample thus prepared was observed with a transmission electron microscope (TEM, manufactured by Hitachi High-Tech Corporation, model number: "H-7650") at a magnification of 10K×. Image analysis was performed with the program of HITACHI EMIP. The particle diameters of 50 randomly selected particles of the polymer (A) were measured, and the average thereof was adopted as a number average particle diameter.

<Swelling Ratio>

The aqueous dispersion of the polymer (A) was dropped onto a 1-centimeter square silicon wafer, which had been subjected to ultrasonic washing with acetone for 10 minutes, and the wafer was spin-coated with the dispersion at 300 rpm for 3 minutes and at 1,000 rpm for 30 seconds. Thus, a smooth film of the polymer (A) was produced. 1 Gram of the film of the polymer (A) thus obtained was immersed in 20 mL of a solvent formed of propylene carbonate (PC) and diethyl carbonate (DEC) at a volume fraction of 1:1, and was shaken at 70°C for 24 hours. Next, an insoluble content was separated by filtration through a wire mesh of 300 mesh, and then the PC/DEC of a soluble content was removed by evaporation. The weight (Y (g)) of the resultant residue was measured. In addition, the PC/DEC adhering to the surface of the insoluble content (film) separated by the above-mentioned filtration was removed through absorption by paper, and then the weight (Z (g)) of the insoluble content (film) was measured. A swelling ratio was determined from the weight (Y (g)) and the weight (Z (g)) thus obtained by the following equation (2).

$$\text{Swelling ratio (\%)} = (Z/(1-Y)) \times 100 \cdots (2)$$

<Surface Acidity>

First, it was recognized that 0.005 mol/L sulfuric acid was loaded into a reagent bottle in the upper portion of the main body of the titration burette of a potentiometric titrator (manufactured by Kyoto Electronics Manufacturing Co., Ltd., model: "AT-510"), and it was recognized that the conductivity of ultrapure water was 2 $\mu$S or less. Next, to remove air in the burette, purging was performed, and bubbles were removed from its nozzle. After that, about 1 g of the aqueous dispersion of the polymer (A) in terms of solid content was collected in a 300-milliliter beaker, and its sample weight was recorded. Ultrapure water was added to the dispersion to dilute the dispersion to 200 mL, and then a 1 mol/L aqueous solution of sodium hydroxide was dropped thereinto. When the endpoint of the titration was reached, the mixture was stirred for about 30 seconds, and it was recognized that its degree of conduction became stable. The RESET button of the measurement program of the titrator was pressed to bring the titrator into a measurement standby state. The START button of the measurement program was pressed to start measurement with the 0.005 mol/L sulfuric acid. When the endpoint of the measurement is reached, the measurement is automatically ended, and a file is stored. Accordingly, the resultant curve was analyzed, and the surface acidity was determined from the amount of the sulfuric acid used by the following equation (3).

Surface acidity (mmol/g) = amount [mL] of acid used in carboxylic acid areas on surfaces of particles $\times$ concentration [mol/L] of acid $\times$ degree of ionization/sample weight [g]/1,000 $\cdots$ (3)    (3)

[Table 1]

| Polymerization Example | | | 1 | 2 | 3 | 4 | 5 | 6 | 7 | 8 | 9 | 10 |
|---|---|---|---|---|---|---|---|---|---|---|---|---|---|
| Polymer name | | | A-1 | A-2 | A-3 | A-4 | A-5 | A-6 | A-7 | A-8 | C-1 | C-2 |
| Classification | Compound name | Monomer name | | | | | | | | | | |
| (a1) | Aromatic vinyl compound | ST | 75 | 4.5 | 58 | 6.5 | 14 | 25 | 40 | 25 | 0 | 80 |
| | | DVB | | 0.5 | | 0.5 | | | | | 2 | |

(continued)

| Polymerization Example | | | 1 | 2 | 3 | 4 | 5 | 6 | 7 | 8 | 9 | 10 |
|---|---|---|---|---|---|---|---|---|---|---|---|---|
| Polymer name | | | A-1 | A-2 | A-3 | A-4 | A-5 | A-6 | A-7 | A-8 | C-1 | C-2 |
| (a2) | Unsaturated carboxylic acid ester | 2EHA | 19.5 | 38 | 17 | 58 | 60 | 49 | 24 | 24 | 48 | 14.5 |
| | | BA | 4 | | 2.5 | 5 | | | 10 | 14 | 6 | |
| | | MMA | | 30 | | | 24.9 | 14 | | | | |
| | | CHMA | | | | 25 | | | 25 | 20 | 40 | |
| | | AMA | | | | 2 | | | | 1 | 1 | |
| | | EDMA | | | 0.5 | | | | | 1 | | 0.5 |
| | | TEGDMA | 0.5 | | | | | | | | | |
| | | TMPTA | | | | | 1 | | 1 | | | |
| | | TMPTMA | | | | | | 2 | | | | |
| (a3) | Unsaturated carboxylic acid | AA | 1 | 4 | 5 | | 0.1 | 6 | | 10 | | 4 |
| | | MA | | 3 | | 3 | | 4 | | 3 | 3 | |
| | | TA | | | 2 | | | | | 2 | | 1 |
| (a4) | Conjugated diene compound | BD | | 20 | | | | | | | | |
| (a5) | α,β-Unsaturated nitrile compound | AN | | | 15 | | | | | | | |
| Physical property evaluation | Number average particle diameter (nm) | | 180 | 370 | 340 | 195 | 50 | 500 | 45 | 650 | 230 | 210 |
| | Swelling ratio (%) | | 180 | 170 | 280 | 150 | 180 | 140 | 170 | 150 | 130 | 230 |
| | Surface acidity (mmol/g) | | 0.07 | 0.39 | 0.42 | 0.12 | 0.01 | 0.67 | 0 | 1.22 | 0.13 | 0.35 |

The numerical values of the respective monomers in Table 1 above each represent the number of parts by mass, and the abbreviations of the respective monomers in Table 1 above represent the following compounds.

<Aromatic Vinyl Compound>

- ST: styrene
- DVB: divinylbenzene

<Unsaturated carboxylic acid ester>

- 2EHA: 2-ethylhexyl acrylate
- BA: butyl acrylate
- MMA: methyl methacrylate
- CHMA: cyclohexyl methacrylate
- AMA: allyl methacrylate
- EDMA: ethylene glycol dimethacrylate
- TEGDMA: triethylene glycol dimethacrylate
- TMPTA: trimethylolpropane triacrylate
- TMPTMA: trimethylolpropane trimethacrylate

<Unsaturated Carboxylic Acid>

- AA: acrylic acid
- MA: methacrylic acid
- TA: itaconic acid

<Conjugated Diene Compound>

- BD: butadiene

<$\alpha,\beta$-Unsaturated Nitrile Compound>

- AN: acrylonitrile

5.2. Example 1

5.2.1. Preparation of Composition for Nonaqueous Secondary Battery Positive Electrode

Polyethyleneimine was added to the aqueous dispersion obtained in the foregoing, which contained 40 mass% of the particles formed of the polymer (A-8), so that the content ratio of polyethyleneimine became 33 parts by mass with respect to 100 parts by mass of the polymer (A-8), followed by sufficient stirring. Thus, a composition for a nonaqueous secondary battery positive electrode was prepared.

5.2.2. Preparation and Physical Property Evaluation of Slurry for Nonaqueous Secondary Battery Positive Electrode

<Preparation of Slurry for Nonaqueous Secondary Battery Positive Electrode>

3 Parts by mass of the polymer (A-8) and 1 part by mass of polyethyleneimine (value in terms of solid content, added as the composition for a nonaqueous secondary battery positive electrode obtained in the foregoing), 100 parts by mass of NMC 811 (product name: "ME-83SC", manufactured by Beijing Dangsheng Material Technology Co., Ltd.) serving as a positive electrode active material, 3 parts by mass of acetylene black, 0.8 part by mass of a thickener (product name: "CMC-2200", manufactured by Daicel Corporation), and 20 parts by mass of water were loaded into a twin-screw planetary mixer (manufactured by PRIMIX Corporation, product name: "T.K. HIVIS MIX 2P-03"), and were stirred at 60 rpm for 1 hour.

After that, the mixture was further stirred for 1 hour to provide a paste. Water was added to the resultant paste to adjust its solid content concentration to 70%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum (about $5.0 \times 10^3$ Pa) at 1,800 rpm for 1.5 minutes. Thus, a slurry for a nonaqueous secondary battery positive electrode was prepared.

<Evaluation of Change in pH with Time>

The pH of the slurry for a nonaqueous secondary battery positive electrode obtained in the foregoing at 25°C immediately after its preparation (hereinafter also referred to as "pH of the slurry immediately after the preparation") was measured with a pH meter (manufactured by HORIBA, Ltd.). As a result, the pH was 9.6. Meanwhile, the slurry for a nonaqueous secondary battery positive electrode obtained in the foregoing was left at rest at 25°C for 1 day. The pH of the slurry at 25°C after 1 day (hereinafter also referred to as "pH of the slurry after 1 day") was measured with the pH meter (manufactured by HORIBA, Ltd.). As a result, the pH was 10.3. The evaluation results are shown in Table 2 below.

5.2.3. Production and Physical Property Evaluation of Positive Electrode for Nonaqueous Secondary Battery

<Production of Positive Electrode for Nonaqueous Secondary Battery>

The slurry for a nonaqueous secondary battery positive electrode prepared in the foregoing was uniformly applied to the surface of a current collector formed of aluminum foil having a thickness of 20 $\mu$m by a doctor blade method so that its thickness after drying became 100 $\mu$m, followed by drying at 120°C for 20 minutes. After that, press working was performed with a roll pressing machine so that the density of the formed film (positive electrode active material layer) became 3.0 g/cm$^3$. Thus, a positive electrode for a nonaqueous secondary battery was obtained.

<Evaluation of State of Electrode>

The positive electrode for a nonaqueous secondary battery obtained in the foregoing was cut into a size measuring 10 cm by 10 cm, and the states of its coated surface and coated back surface were observed. When the corrosion of the current collector occurs, warping or a crease occurs in the coated back surface. Further, when the corrosion is significant, a crack of the mixture layer of the coated surface occurs. When neither warping nor a crease is observed in each of the coated surface and the coated back surface, the corrosion of the current collector due to an increase in pH of the slurry is reduced, and hence the electrode shows a satisfactory cycle characteristic. Evaluation criteria are as described below. The evaluation results are shown in Table 2 below.

(Evaluation Criteria)

- Score 5: No warping or crease is present in the coated back surface, and hence its state is satisfactory.
- Score 4: Warping slightly occurs in the coated back surface, but its state is generally satisfactory.
- Score 3: A crease occurs in 50% or less of the area of the coated back surface, but its state is generally satisfactory.
- Score 2: A crease occurs in 50% or more of the area of the coated back surface, and hence the positive electrode is difficult to use.
- Score 1: A crease occurs in 50% or more of the area of the coated back surface and a crack occurs in the mixture layer of the coated surface, and hence the positive electrode cannot be used.

<Evaluation of Adhesive Strength>

In the surface of the positive electrode for a nonaqueous secondary battery obtained in the foregoing, ten cuts each having a depth extending from the positive electrode active material layer to the current collector were made with a knife at intervals of 2 mm in each of longitudinal and latitudinal directions, to thereby make cuts in a grid shape. A pressure-sensitive adhesive tape having a width of 18 mm (manufactured by Nichiban Co., Ltd., product name: "Cellotape" (trademark), specified in JIS Z1522:2009) was attached to the cuts and immediately peeled off, and the degree of detachment of the active material was evaluated by visual judgment. Evaluation criteria are as described below. The evaluation results are shown in Table 2 below.

(Evaluation Criteria)

- Score 5: The number of detached pieces of the active material layer is 0.
- Score 4: The number of detached pieces of the active material layer is from 1 to 5.
- Score 3: The number of detached pieces of the active material layer is from 6 to 20.
- Score 2: The number of detached pieces of the active material layer is from 21 to 40.
- Score 1: The number of detached pieces of the active material layer is 41 or more.

5.2.4. Production and Physical Property Evaluation of Nonaqueous Secondary Battery

<Production of Negative Electrode for Nonaqueous Secondary Battery>

1 Part by mass (in terms of solid content) of a thickener (product name: "CMC-2200", manufactured by Daicel Corporation), 100 parts by mass (in terms of solid content) of graphite serving as a negative electrode active material, and 68 parts by mass of water were loaded into a twin-screw planetary mixer (manufactured by PRIMIX Corporation, product name: "T.K. HIVIS MIX 2P-03"), and were stirred at 60 rpm for 1 hour.

Next, a SBR (product name: "TRD105A", manufactured by ENEOS Materials Corporation) was added in an amount corresponding to 2 parts by mass (in terms of solid content) to the mixture, and the whole was further stirred for 1 hour to provide a paste. Water was loaded into the resultant paste to adjust its solid content concentration to 50%, and then the materials were stirred and mixed with a stirring deaerator (manufactured by Thinky Corporation, product name: "AWATORI RENTARO") at 200 rpm for 2 minutes, at 1,800 rpm for 5 minutes, and in a vacuum at 1,800 rpm for 1.5 minutes. Thus, a slurry for a nonaqueous secondary battery negative electrode was prepared.

Next, the slurry for a nonaqueous secondary battery negative electrode prepared in the foregoing was uniformly applied to the surface of a current collector formed of copper foil having a thickness of 20 $\mu$m by a doctor blade method so that its thickness after drying became 80 $\mu$m, followed by drying treatment at 120°C for 20 minutes. After that, press working was performed with a roll pressing machine so that the density of the formed film (negative electrode active material layer) became 1.6 g/cm$^3$. Thus, a negative electrode for a nonaqueous secondary battery was obtained.

<Assembly of Lithium Ion Battery Cell>

In a glove box in which Ar purging had been performed so that the dew point was -80°C or less, the negative electrode for a nonaqueous secondary battery obtained in the foregoing that had been punch-molded into a circular shape having a diameter of 16.16 mm was mounted on a bipolar coin cell (manufactured by Hohsen Corp., product name: "HS Flat Cell"). Next, a separator (manufactured by Celgard LLC, product name: "CELGARD #2400") formed of a polypropylene-made porous membrane punched into a circular shape having a diameter of 24 mm was superimposed and mounted on the negative electrode for a nonaqueous secondary battery. Further, 500 $\mu$L of an electrolytic solution was injected into the laminate so that air did not enter. After that, the positive electrode for a nonaqueous secondary battery obtained in the foregoing that had been punch-molded into a circular shape having a diameter of 15.95 mm was superimposed and mounted on the separator, and the exterior body of the bipolar coin cell was sealed by tightening its screws. Thus, a lithium ion battery cell (an example of the nonaqueous secondary battery) was assembled. The electrolytic solution used here is a solution obtained by dissolving LiPF$_6$ at a concentration of 1 mol/L in a solvent containing ethylene carbonate and ethyl methyl carbonate at 1/1 (mass ratio).

<Evaluation of Resistance Increase Rate>

For the lithium ion battery cell produced in the foregoing, in a thermostat controlled to a temperature of 25°C, charge was started at a constant current (1.0C). At the time point when the voltage reached 3.8 V, the charge was subsequently continued at a constant voltage (3.8 V). The time point when the current value reached 0.01C was defined as charge completion (cut-off). After that, discharge was started at a constant current (0.05C). The time point when the voltage reached 2.5 V was defined as discharge completion (cut-off), and a discharge capacity in the 0th cycle was calculated. Further, charge was started at a constant current (1.0C). At the time point when the voltage reached 3.8 V, the charge was subsequently continued at a constant voltage (3.8 V). The time point when the current value reached 0.01C was defined as charge completion (cut-off). After that, discharge was started at a constant current (1.0C). The time point when the voltage reached 2.5 V was defined as discharge completion (cut-off), and a discharge capacity in the 1st cycle was calculated. In this manner, charge and discharge were repeated 100 times. After charge and discharge had been repeated 100 times, charge and discharge were performed in the same manner as in the 0th cycle, and a discharge capacity in the 101st cycle was evaluated. A resistance increase rate was calculated by the following equation (4), and was evaluated by the following criteria. The results are shown in Table 2 below.

Resistance increase rate (%) = (discharge capacity in 101st cycle-discharge capacity in 100th cycle)/(discharge capacity in 0th cycle-discharge capacity in 1st cycle) $\times$ 100 $\cdots$ (4)          (4)

(Evaluation Criteria)

- Score 5: The resistance increase rate is 100% or more and less than 110%.
- Score 4: The resistance increase rate is 110% or more and less than 120%.
- Score 3: The resistance increase rate is 120% or more and less than 130%.
- Score 2: The resistance increase rate is 130% or more and less than 140%.
- Score 1: The resistance increase rate is 140% or more and less than 150%.
- Score 0: The resistance increase rate is 150% or more.

<Evaluation of Cycle Characteristic>

For the lithium ion battery cell produced in the foregoing, in a thermostat controlled to a temperature of 25°C, charge was started at a constant current (1.0C). At the time point when the voltage reached 4.2 V, the charge was subsequently continued at a constant voltage (4.2 V). The time point when the current value reached 0.01 C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 200 times. A capacity retention ratio was calculated by the following equation (5), and was evaluated by the following criteria. The evaluation results are shown in Table 2 below.

Capacity retention ratio (%)

= (discharge capacity in 200th cycle)/(discharge capacity in 1st cycle) ⋯ (5)

(Evaluation Criteria)

- Score 5: The capacity retention ratio is 95% or more.
- Score 4: The capacity retention ratio is 90% or more and less than 95%.
- Score 3: The capacity retention ratio is 85% or more and less than 90%.
- Score 2: The capacity retention ratio is 80% or more and less than 85%.
- Score 1: The capacity retention ratio is 75% or more and less than 80%.
- Score 0: The capacity retention ratio is less than 75%.

5.3. Examples 2 to 15 and Comparative Examples 1 to 5

Compositions for nonaqueous secondary battery positive electrodes were each obtained in the same manner as in the above-mentioned section "5.2.1. Preparation of Composition for Nonaqueous Secondary Battery Positive Electrode" except that the kinds and amounts of the used components were set as shown in each of Table 2 below and Table 3 below. A slurry for a nonaqueous secondary battery positive electrode was prepared in the same manner as in Example 1 described above except that the compositions for nonaqueous secondary battery positive electrodes thus obtained were each used and so that the content ratio of the polymer (A) became 3 parts by mass. Positive electrodes for nonaqueous secondary batteries and lithium ion battery cells were produced by using the slurries, and were each evaluated in the same manner as in Example 1 described above.

5.4. Evaluation Results

The compositions of the compositions for nonaqueous secondary battery positive electrodes used in Examples 1 to 15 and Comparative Examples 1 to 5, and the respective evaluation results are shown in Table 2 below and Table 3 below.

[Table 2]

| Composition for nonaqueous secondary battery positive electrode | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Constituent | | | | | | | | | | | |
| Polymer (A) | Kind | A-8 | A-6 | A-6 | A-8 | A-7 | A-7 | A-5 | A-5 | A-1 | A-2 |
| | Content (part(s) by mass) | 100 | 100 | 100 | 100 | 100 | 100 | 100 | 100 | 100 | 100 |
| Polyamine compound (B) | Kind | PEI1 | PAA1 | PVA | PAA2 | | | | | PEI2 | PEI2 |
| | Content (part(s) by mass) | 33 | 50 | 33 | 50 | | | | | 50 | 17 |
| Boron-containing compound (C) | Kind | | | | | Boric acid | Lithium borate | Sodium borate | Potassium borate | | |
| | Content (part(s) by mass) | | | | | 33 | 40 | 50 | 60 | | |
| Acidic compound (D) | Kind | | | | | | | | | Malonic acid | Succinic acid |
| | Content (part(s) by mass) | | | | | | | | | 17 | 50 |
| Ratio between numbers of parts in composition | Mb/Md | - | - | - | - | - | - | - | - | 3 | 0.3 |
| Evaluation result | pH of slurry immediately after preparation | 9.6 | 9.4 | 9.5 | 9.6 | 9.2 | 9.3 | 9.6 | 9.8 | 9 | 9.2 |
| | pH of slurry after 1 day | 10.3 | 10.4 | 10.3 | 10.3 | 9.5 | 9.7 | 10.2 | 10.5 | 9.7 | 9.4 |
| | State of electrode | 5 | 5 | 4 | 4 | 5 | 4 | 4 | 4 | 5 | 5 |
| | Adhesive strength of electrode | 5 | 5 | 5 | 5 | 4 | 5 | 5 | 5 | 5 | 5 |
| | Resistance increase rate | 3 | 4 | 3 | 3 | 4 | 4 | 4 | 4 | 5 | 4 |
| | Cycle characteristic | 4 | 4 | 4 | 4 | 4 | 5 | 4 | 4 | 4 | 4 |

[Table 3]

| Composition for nonaqueous secondary battery electrode Constituent | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Polymer (A) | Kind | A-3 | A-3 | A-4 | A-2 | A-1 | C-1 | C-2 | A-3 | A-3 | A-2 |
| | Content (part(s) by mass) | 100 | 100 | 100 | 100 | 100 | 100 | 100 | 100 | 100 | 100 |
| Polyamine compound (B) | Kind | PAA2 | PVA | PEI2 | PEI1 | PEI2 | PEI1 | PEI2 | | | |
| | Content (part(s) by mass) | 33 | 17 | 25 | 3 | 33 | 25 | 33 | | | |
| Boron-containing compound (C) | Kind | | | | Boric acid | Sodium borate | | | | | |
| | Content (part(s) by mass) | | | | 13 | 10 | | | | | |
| Acidic compound (D) | Kind | Sulfuric acid | Phosphoric acid | Ammonium sulfate | Malonic acid | Malonic acid | Malonic acid | Malonic acid | Malonic acid | Sulfuric acid | |
| | Content (part(s) by mass) | 17 | 33 | 25 | 33 | 7 | 25 | 17 | 67 | 50 | |
| Ratio between numbers of parts in composition | Mb/Md | 2 | 0.5 | 1 | 0.1 | 5 | 1 | 2 | - | - | - |

(continued)

| Composition for nonaqueous secondary battery positive electrode | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Constituent | | | | | | | | | | | |
| Evaluation result | pH of slurry immediately after preparation | 9.6 | 9.5 | 9.9 | 9.7 | 10 | 9.6 | 9.5 | 8.6 | 8.9 | 11.2 |
| | pH of slurry after 1 day | 10.1 | 10 | 10.4 | 10.1 | 10.5 | 10.1 | 10 | 11.2 | 10.8 | 12.1 |
| | State of electrode | 4 | 4 | 5 | 5 | 5 | 4 | 4 | 2 | 3 | 2 |
| | Adhesive strength of electrode | 5 | 5 | 5 | 5 | 5 | 5 | 2 | 3 | 2 | 3 |
| | Resistance increase rate | 5 | 5 | 4 | 5 | 4 | 3 | 5 | 4 | 4 | 2 |
| | Cycle characteristic | 5 | 3 | 4 | 5 | 5 | 2 | 2 | 2 | 1 | 1 |

EP 4 679 536 A1

25

The following respective products were used as the components in Table 2 above and Table 3 above.

<Polyamine Compound (B)>

- PEI1: polyethyleneimine, manufactured by FUJIFILM Wako Pure Chemical Corporation, product name: "Polyethyleneimine (average molecular weight: about 600)"
- PEI2: polyethyleneimine, manufactured by FUJIFILM Wako Pure Chemical Corporation, product name: "Polyethyleneimine (average molecular weight: about 1,800)"
- PVA: polyvinylamine, manufactured by BASF SE, product name: "Lupamin 9095"
- PAA1: polyallylamine, manufactured by Nittobo Medical Co., Ltd., product name: "PAA-03"
- PAA2: polyallylamine, manufactured by Nittobo Medical Co., Ltd., product name: "PAA-05"

<Boron-containing Compound (C)>

- Boric acid: manufactured by FUJIFILM Wako Pure Chemical Corporation, product name: "Boric Acid"
- Lithium borate: manufactured by FUJIFILM Wako Pure Chemical Corporation, product name: "Lithium Tetraborate, Granules"
- Sodium borate: manufactured by FUJIFILM Wako Pure Chemical Corporation, product name: "Sodium Tetraborate Decahydrate"
- Potassium borate: manufactured by FUJIFILM Wako Pure Chemical Corporation, product name: "Potassium Tetraborate Tetrahydrate"

<Acidic Compound (D)>

- Malonic acid: manufactured by FUJIFILM Wako Pure Chemical Corporation, product name: "Malonic Acid"
- Succinic acid: manufactured by FUJIFILM Wako Pure Chemical Corporation, product name: "Succinic Acid"
- Sulfuric acid: manufactured by FUJIFILM Wako Pure Chemical Corporation, product name: "Sulfuric Acid"
- Phosphoric acid: manufactured by FUJIFILM Wako Pure Chemical Corporation, product name: "Phosphoric Acid"
- Ammonium sulfate: manufactured by FUJIFILM Wako Pure Chemical Corporation, product name: "Ammonium Sulfate"

As is apparent from Table 2 above and Table 3 above, in each of the slurries for nonaqueous secondary battery positive electrodes prepared by using the compositions for nonaqueous secondary battery positive electrodes described in Examples 1 to 15, and Comparative Examples 1 and 2, the pH after 1 day was able to be reduced to 10.5 or less. In contrast, in each of the slurries for nonaqueous secondary battery positive electrodes prepared by using the compositions for nonaqueous secondary battery positive electrodes described in Comparative Examples 3 to 5, the following result was obtained: the pH after 1 day exceeded 10.5. A possible reason for the foregoing is as described below. The pH of each of the slurries is liable to shift to a basic side with time because water is used as a liquid medium, and hence the water and the positive electrode active material thereof react with each other to produce a hydroxide ion. However, the compositions for nonaqueous secondary battery positive electrodes of Examples 1 to 15, and Comparative Examples 1 and 2 each include the polyamine compound (B) and/or the boron-containing compound (C). Accordingly, it is conceivable that the hydroxide ion produced by the reaction between the water and the positive electrode active material was buffered by the polyamine compound (B) and/or the boron-containing compound (C), and hence the change in pH of each of the slurries for nonaqueous secondary battery positive electrodes with time was reduced. It is assumed that as a result of the foregoing, the occurrence of the corrosion of each of the positive electrodes for nonaqueous secondary batteries produced by using the slurries was able to be effectively reduced. In addition, the slurries for nonaqueous secondary battery positive electrodes prepared by using the compositions for nonaqueous secondary battery positive electrodes described in Examples 1 to 15 each have satisfactory adhesiveness. In addition, each of the positive electrodes for nonaqueous secondary batteries produced by using the slurries is reduced in occurrence of corrosion, and hence has a low resistance. Accordingly, it is assumed that the electrodes each showed a satisfactory charge-discharge durability characteristic.

The present invention is not limited to the embodiments described above, and various modifications may be made thereto. The present invention encompasses substantially the same configurations as the configurations described in the embodiments (e.g., configurations having the same functions, methods, and results, or configurations having the same objectives and effects). The present invention also encompasses configurations obtained by replacing non-essential elements of the configurations described in the embodiments with other elements. The present invention also encompasses configurations exhibiting the same operations and effects as those of the configurations described in the embodiments, or configurations capable of achieving the same objectives as those of the configurations described in the embodiments. The present invention also encompasses configurations obtained by adding known art to the configurations described in the embodiments.

**Claims**

1. A composition for a nonaqueous secondary battery positive electrode, the composition comprising:

   a polymer (A);
   at least one kind selected from a group consisting of a polyamine compound (B) and a boron-containing compound (C); and
   a liquid medium (E),
   wherein, when a total of repeating units in the polymer (A) is defined as 100 mass%, the polymer (A) contains
   5 mass% to 75 mass% of a repeating unit (al) derived from an aromatic vinyl compound, and
   20 mass% to 90 mass% of a repeating unit (a2) derived from an unsaturated carboxylic acid ester.

2. The composition for a nonaqueous secondary battery positive electrode according to claim 1, wherein the polyamine compound (B) is at least one kind selected from a group consisting of polyethyleneimine, polytetramethyleneimine, polyvinylamine, and polyallylamine.

3. The composition for a nonaqueous secondary battery positive electrode according to claim 1, wherein the boron-containing compound (C) is at least one kind selected from a group consisting of boric acid, lithium tetraborate, sodium tetraborate, and potassium tetraborate.

4. The composition for a nonaqueous secondary battery positive electrode according to claim 1, further comprising an acidic compound (D).

5. The composition for a nonaqueous secondary battery positive electrode according to claim 4, wherein the acidic compound (D) is at least one kind selected from a group consisting of malonic acid, succinic acid, sulfuric acid, phosphoric acid, and ammonium sulfate.

6. The composition for a nonaqueous secondary battery positive electrode according to claim 4, wherein, when a content of the polyamine compound (B) is represented by Mb parts by mass and a content of the acidic compound (D) is represented by Md parts by mass, a value of a ratio Mb/Md is from 0.3 to 5.0.

7. The composition for a nonaqueous secondary battery positive electrode according to claim 1, wherein the polymer (A) further contains 0.1 mass% to 10 mass% of a repeating unit (a3) derived from an unsaturated carboxylic acid.

8. The composition for a nonaqueous secondary battery positive electrode according to claim 1,

   wherein the polymer (A) is in a form of polymer particles, and
   wherein the polymer particles have a number average particle diameter of 50 nm or more and 500 nm or less.

9. The composition for a nonaqueous secondary battery positive electrode according to claim 1, further comprising a thickener.

10. A slurry for a nonaqueous secondary battery positive electrode, the slurry comprising:

    the composition for a nonaqueous secondary battery positive electrode of any one of claims 1 to 9; and
    a positive electrode active material.

11. A positive electrode for a nonaqueous secondary battery, the positive electrode comprising:

a current collector; and
an active material layer formed by applying the slurry for a nonaqueous secondary battery positive electrode of claim 10 to a surface of the current collector and drying the slurry.

12. A nonaqueous secondary battery comprising the positive electrode for a nonaqueous secondary battery of claim 11.

## INTERNATIONAL SEARCH REPORT

| International application No. |
| --- |
| **PCT/JP2024/006779** |

**A. CLASSIFICATION OF SUBJECT MATTER**

*H01M 4/62*(2006.01)i; *C08F 212/08*(2006.01)i; *C08F 220/10*(2006.01)i; *H01G 11/06*(2013.01)i; *H01G 11/38*(2013.01)i; *H01M 4/13*(2010.01)i; *H01M 4/139*(2010.01)i

FI: H01M4/62 Z; C08F212/08; C08F220/10; H01G11/06; H01G11/38; H01M4/13; H01M4/139

According to International Patent Classification (IPC) or to both national classification and IPC

**B. FIELDS SEARCHED**

Minimum documentation searched (classification system followed by classification symbols)

H01M4/62; C08F212/08; C08F220/10; H01G11/06; H01G11/38; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/181744 A1 (ZEON CORPORATION) 26 September 2019 (2019-09-26) claims 1-5, 10-12, paragraphs [0023]-[0051] | 1-2, 7, 9-12 |
| Y | | 8 |
| A | | 3-6 |
| X | WO 2019/181660 A1 (ZEON CORPORATION) 26 September 2019 (2019-09-26) claims 1-5, 8-10, paragraphs [0021]-[0049] | 1-2, 7, 9-12 |
| Y | | 8 |
| A | | 3-6 |
| X | WO 2015/146649 A1 (SHOWA DENKO K.K.) 01 October 2015 (2015-10-01) claims 1-3, 7, 9, paragraphs [0023]-[0024], examples | 1, 3-5, 7, 9-12 |
| Y | | 8 |
| A | | 2, 6 |

✓ Further documents are listed in the continuation of Box C.   ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 679 536 A1**

## INTERNATIONAL SEARCH REPORT

<table>
<tr><td colspan="2"></td><td>International application No.<br>**PCT/JP2024/006779**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | JP 2020-184462 A (JSR CORPORATION) 12 November 2020 (2020-11-12)<br>claims 1, 4, paragraph [0051] | 8 |
| Y | JP 2020-184461 A (JSR CORPORATION) 12 November 2020 (2020-11-12)<br>claims 1, 3-4, paragraph [0052] | 8 |
| A | WO 2020/012940 A1 (JSR CORPORATION) 16 January 2020 (2020-01-16)<br>entire text | 1-12 |

Form PCT/ISA/210 (second sheet) (July 2022)

## INTERNATIONAL SEARCH REPORT
### Information on patent family members

International application No.

**PCT/JP2024/006779**

| Patent document cited in search report | | | Publication date (day/month/year) | Patent family member(s) | | | Publication date (day/month/year) |
|---|---|---|---|---|---|---|---|
| WO | 2019/181744 | A1 | 26 September 2019 | US | 2020/0411868 | A1 | |
| | | | | claims 1-5, 10-12, paragraphs [0034]-[0105] | | | |
| | | | | EP | 3771004 | A1 | |
| | | | | CN | 111801821 | A | |
| | | | | KR | 10-2020-0134225 | A | |
| WO | 2019/181660 | A1 | 26 September 2019 | US | 2020/0411871 | A1 | |
| | | | | claims 1-5, 8-10, paragraphs [0030]-[0106] | | | |
| | | | | EP | 3771003 | A1 | |
| | | | | CN | 111801822 | A | |
| | | | | KR | 10-2020-0134223 | A | |
| WO | 2015/146649 | A1 | 01 October 2015 | CN | 105940530 | A | |
| | | | | claims 1-3, 7, 9, paragraphs [0046]-[0047], examples | | | |
| JP | 2020-184462 | A | 12 November 2020 | WO | 2020/226035 | A1 | |
| | | | | claims 1, 4, paragraph [0051] | | | |
| | | | | EP | 3968417 | A1 | |
| | | | | CN | 113795950 | A | |
| | | | | KR | 10-2022-0006521 | A | |
| JP | 2020-184461 | A | 12 November 2020 | WO | 2020/226035 | A1 | |
| | | | | claims 1, 3-4, paragraph [0052] | | | |
| | | | | EP | 3968417 | A1 | |
| | | | | CN | 113795950 | A | |
| | | | | KR | 10-2022-0006521 | A | |
| WO | 2020/012940 | A1 | 16 January 2020 | CN | 112385062 | A | |
| | | | | entire text | | | |
| | | | | KR | 10-2021-0029192 | A | |

Form PCT/ISA/210 (patent family annex) (July 2022)

**REFERENCES CITED IN THE DESCRIPTION**

**Patent documents cited in the description**

- WO 2020095466 A1
- JP 2019194944 A
- JP 5999399 B
- JP 5477610 B
- JP 6544150 B